# EUROPEAN PATENT APPLICATION

(11) **EP 4 693 241 A1**
(43) Date of publication of application: **11.02.2026**
(21) Application number: 23930896.8
(22) Date of filing: 08.12.2023
(51) Int. Cl.: G07G 1/12, G07G 1/01

(54) **ACCOUNTING PROCESSING DEVICE AND PROGRAM RECORDING MEDIUM**

(30) Priority: 24.03.2023 JP 2023048739
(71) Applicant: Toshiba TEC Kabushiki Kaisha, Tokyo 141-8562 (JP)
(72) Inventor: SUZUKI, Yasunobu, Izunokuni-shi, Shizuoka 410-2392 (JP)
(74) Representative: Bandpay & Greuter
(86) International application number: PCT/JP2023/044098
(87) International publication number: WO 2024/202272

(57) **Abstract**

An accounting processing apparatus according to an embodiment includes a registration screen display unit, a receiving unit, an accounting screen display unit, and an accounting processing unit. In a case of receiving input operation while a standby screen is being displayed, the registration screen display unit displays a product registration screen for receiving registration of first information related to a product to be purchased. The receiving unit receives second information related to the transaction of the product from the registration machine. In a case of receiving the second information, the accounting screen display unit displays an accounting screen for accounting processing for a product based on the second information. The accounting processing unit performs accounting processing on the product based on the first information received through the product registration screen or the second information received by the receiving unit.

## Description

### FIELD

Embodiments described herein relate generally to an accounting processing apparatus and a program recording medium.

### BACKGROUND

In recent years, in retail stores such as supermarkets, an accounting system called a semi-self-method or a full-self-method has attracted attention from the viewpoint of labor reduction, efficiency improvement, and the like.

An accounting system of the semi-self-method separates a registration machine that registers a product of a customer and an accounting machine that receives payment for the product and settles a sales transaction with the customer. Then, a clerk who is an employee of a store operates the registration machine, and a customer operates the accounting machine.

On the other hand, a full-self-type accounting system has functions of both a registration machine that registers a product of a customer and an accounting machine that receives payment for the product and settles a sales transaction with the customer, and the customer operates both the registration of the product and the payment for the product.

Conventionally, an accounting system capable of operating by switching between the semi-self-method and the full-self-method is also considered, but in order to switch the operation, a special operation, for example, a switching operation by a clerk, an operation of changing the setting of the operation method and restarting the apparatus, or the like is required. For this reason, for example, it is desired that the operation can be easily changed to a state corresponding to the semi-self-method or the full-self-method according to a congestion situation of the store.

### CITATION LIST

### PATENT LITERATURE

Patent Literature 1: Jpn. Pat. Appln. KOKAI Publication No. 2001 076261

### SUMMARY

An object of an embodiment of the present invention is to provide an accounting processing apparatus and a program recording medium that can be easily changed to a state corresponding to a semi-self-method or a full-self-method.

### BRIEF DESCRIPTION OF THE DRAWINGS

FIG. 1 is a schematic diagram illustrating a schematic configuration of an accounting system according to the present embodiment.
FIG. 2 is a block diagram illustrating a main circuit configuration of a registration machine.
FIG. 3 is a block diagram illustrating a main circuit configuration of an accounting processing apparatus.
FIG. 4 is a block diagram illustrating a main circuit configuration of a server.
FIG. 5 is a flowchart illustrating a main procedure of information processing executed by a processor of the accounting processing apparatus according to an accounting program.
FIG. 6 is a flowchart illustrating the main procedure of information processing executed by the processor of the accounting processing apparatus according to the accounting program.
FIG. 7 is a flowchart illustrating the main procedure of information processing executed by a processor of the registration machine according to a registration program.
FIG. 8A is a flowchart illustrating the main procedure of information processing executed by the processor of the registration machine according to the registration program.
FIG. 8B is a flowchart illustrating the main procedure of information processing executed by the processor of the registration machine according to the registration program.
FIG. 9 is a diagram illustrating an example of a display screen on a touch panel of the accounting processing apparatus.
FIG. 10 is a diagram illustrating an example of the display screen on the touch panel of the accounting processing apparatus.
FIG. 11 is a diagram illustrating an example of the display screen on the touch panel of the accounting processing apparatus.
FIG. 12 is a diagram illustrating an example of the display screen on the touch panel of the accounting processing apparatus.
FIG. 13 is a diagram illustrating an example of the display screen on the touch panel of the accounting processing apparatus.
FIG. 14 is a diagram illustrating an example of the display screen on the touch panel of the accounting processing apparatus.
FIG. 15 is a diagram illustrating an example of the display screen on the touch panel of the accounting processing apparatus.
FIG. 16 is a diagram illustrating an example of the display screen on the touch panel of the accounting processing apparatus.
FIG. 17 is a diagram illustrating an example of the display screen on the touch panel of the accounting processing apparatus.
FIG. 18 is a diagram illustrating an example of a display screen on a touch panel of the registration machine.
FIG. 19 is a diagram illustrating an example of the display screen on the touch panel of the registration machine.
FIG. 20 is a diagram illustrating an example of the display screen on the touch panel of the registration machine.
FIG. 21 is a diagram illustrating an example of the display screen on the touch panel of the registration machine.
FIG. 22 is a diagram illustrating an example of the display screen on the touch panel of the registration machine.
FIG. 23 is a diagram illustrating an example of the display screen on the touch panel of the registration machine.
FIG. 24 is a diagram illustrating an example of the display screen on the touch panel of the registration machine.
FIG. 25 is a diagram illustrating an example of the display screen on the touch panel of the accounting processing apparatus.
FIG. 26 is a diagram illustrating an example of the display screen on the touch panel of the accounting processing apparatus.
FIG. 27 is a diagram illustrating an example of the display screen on the touch panel of the accounting processing apparatus.
FIG. 28 is a diagram illustrating an example of the display screen on the touch panel of the accounting processing apparatus.
FIG. 29 is a diagram illustrating an example of the display screen on the touch panel of the accounting processing apparatus.
FIG. 30 is a diagram illustrating an example of the display screen on the touch panel of the accounting processing apparatus.
FIG. 31 is a diagram illustrating an example of the display screen on the touch panel of the accounting processing apparatus.
FIG. 32 is a diagram illustrating an example of the display screen on the touch panel of the accounting processing apparatus.
FIG. 33 is a diagram illustrating an example of the display screen on the touch panel of the accounting processing apparatus.
FIG. 34 is a diagram illustrating an example of the display screen on the touch panel of the accounting processing apparatus.

### DETAILED DESCRIPTION

An accounting processing apparatus according to an embodiment includes a registration screen display unit, a receiving unit, an accounting screen display unit, and an accounting processing unit. In a case of receiving input operation while a standby screen is being displayed, the registration screen display unit displays a product registration screen for receiving registration of first information related to a product to be purchased. The receiving unit receives second information related to the transaction of the product from the registration machine. In a case of receiving the second information, the accounting screen display unit displays an accounting screen for accounting processing for a product based on the second information. The accounting processing unit performs accounting processing on the product based on the first information received through the product registration screen or the second information received by the receiving unit.

Hereinafter, an embodiment of an accounting processing apparatus that can be easily changed to a state corresponding to a semi-self-method or a full-self-method in an accounting system will be described with reference to the drawings.

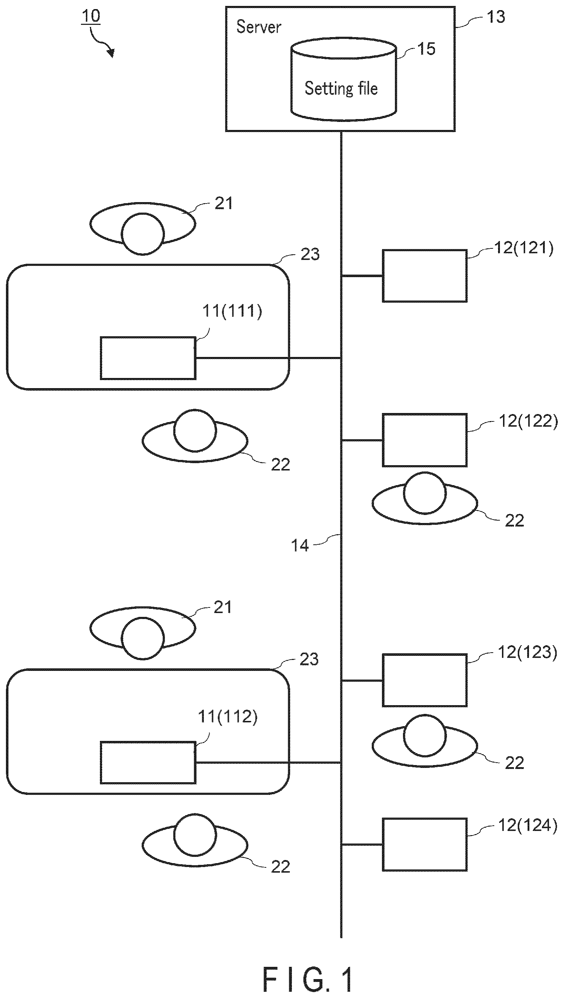

FIG. 1 is a schematic diagram illustrating a schematic configuration of an accounting system 10 according to the present embodiment. The accounting system 10 includes a registration machine 11, an accounting processing apparatus 12, a server 13, and a network 14 connecting these. The type of the network 14 is not particularly limited, but a wired or wireless local area network (LAN) is generally applied.

In a case where the accounting system 10 is operated by the semi-self-method, the registration machine 11 is operated by a clerk 21 who plays a role called a checker, and a product of a customer is registered. The accounting processing apparatus 12 is operated by a customer 22 who purchases a product at a store even in a case where the accounting system 10 is operated in either the semi-self-method or the full-self-method. The accounting processing apparatus 12 has functions of both a registration machine that registers a product of a customer and an accounting machine that receives payment for the product and settles a buying and selling transaction with the customer. In a case where the accounting system 10 is operated by the semi-self-method, the accounting processing apparatus 12 is operated as an accounting machine (hybrid point of sales (POS) device) that receives payment for a product registered by the registration machine 11 and settles the buying and selling transaction with the customer. In addition, the accounting processing apparatus 12 is operated as a full-self-POS device that executes both the processing of registering the product and the processing of payment for the product by the operation of the customer in a case where the accounting system 10 is operated by the full-self-method.

The customer 22 who settles the buying and selling transaction by operating the accounting processing apparatus 12 can be referred to as a settler, a purchaser, or the like. Note that the transaction is not limited to payment for the product. For example, payment of consideration for services is also an aspect of the transaction.

The registration machine 11 is attached to a work table 23 in FIG. 1. The work table 23 has a rectangular top plate. A plurality of the work tables 23 is arranged such that the longitudinal directions of the top plates are substantially parallel to each other, thereby forming a passage for the customer 22, that is, a so-called checkout lane.

The registration machine 11 and the accounting processing apparatus 12 are arranged for each checkout lane. One registration machine 11 and a plurality of the accounting processing apparatuses 12 are arranged for one checkout lane. Then, in a case where the accounting system 10 is operated by the semi-self-method, the registration machine 11 transmits information related to the buying and selling transaction to the accounting processing apparatus 12 arranged in the same checkout lane. The registration machine 11 may transmit the information regarding the transaction to the accounting processing apparatus 12 through the server 13, or may transmit the information to the accounting processing apparatus 12 without going through the server 13. In addition, the registration machine 11 can transmit information related to the transaction not only to the accounting processing apparatus 12 arranged in the same checkout lane but also to the accounting processing apparatus 12 arranged in an adjacent checkout lane.

Incidentally, FIG. 1 illustrates an example in which one registration machine 11 and two accounting processing apparatuses 12 are arranged for each of two checkout lanes. Specifically, one registration machine 11(111) with one registration machine ID "111", two accounting processing apparatuses 12(121) and 12(122) with the accounting machine IDs "121" and "122" are arranged in one checkout lane, and one registration machine 11(112) with a registration machine ID "112", and two accounting processing apparatuses 12(123) and 12(124) with the accounting machine IDs "123" and "124" are arranged in another checkout lane. In such an arrangement, in the present embodiment, one registration machines 11(111) can transmit information related to a transaction to the accounting processing apparatus 12(123) of an adjacent checkout lane in addition to the accounting processing apparatus 12(121) and the accounting processing apparatus 12(122) of the same checkout lane. Similarly, the other registration machine 11(112) can transmit information related to the transaction to the accounting processing apparatus 12(122) of the adjacent checkout lane in addition to the accounting processing apparatus 12(123) and the accounting processing apparatus 12(124) of the same checkout lane.

Note that the registration machine ID is a unique identifier set for each registration machine 11 in order to individually identify each registration machine 11. The accounting machine ID is a unique identifier set for each accounting processing apparatus 12 in order to individually identify each accounting processing apparatus 12.

On the other hand, in a case where the product is not registered in the registration machine 11 by the operation of the clerk 21 and the information related to the transaction is not transmitted to the accounting processing apparatus 12, the accounting processing apparatus 12 can execute both the registration of the product and the payment for the product by the operation of the customer 22. That is, the counting processing apparatus 12 is operated as a full self-POS device.

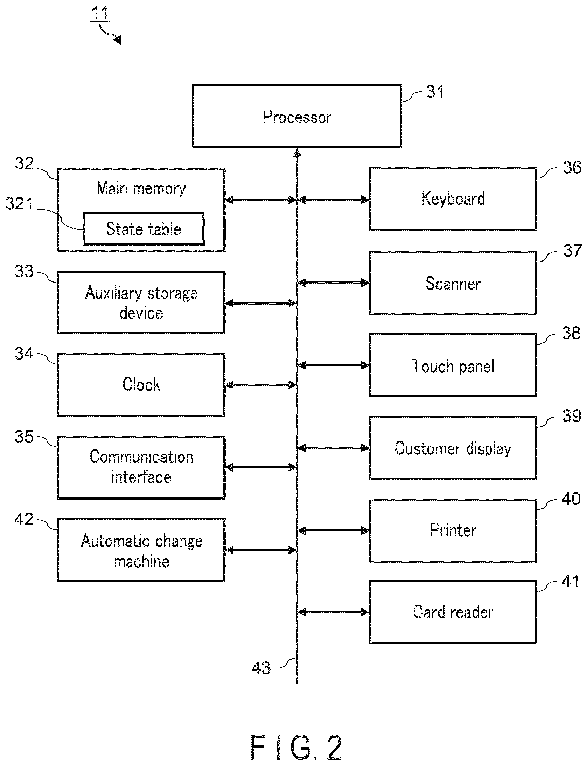

FIG. 2 is a block diagram illustrating a main circuit configuration of the registration machine 11. The registration machine 11 includes a processor 31, a main memory 32, an auxiliary storage device 33, a clock 34, a communication interface 35, a keyboard 36, a scanner 37, a touch panel 38, a customer display 39, a printer 40, a card reader 41, an automatic change machine 42, a system transmission path 43, and the like. The system transmission path 43 includes an address bus, a data bus, a control signal line, and the like. The system transmission path 43 connects the processor 31 and other units directly or through a signal input/output circuit, and transmits data signals exchanged therebetween.

The registration machine 11 configures a computer by connecting the processor 31 to the main memory 32, the auxiliary storage device 33, the clock 34, and the communication interface 35 through the system transmission path 43. Then, the registration machine 11 connects devices such as the keyboard 36, the scanner 37, the touch panel 38, the customer display 39, the printer 40, and the card reader 41 to the computer through the system transmission path 43.

The processor 31 corresponds to a central part of the computer. The processor 31 controls each unit to implement various functions as the registration machine 11 according to an operating system or an application program. The processor 31 is preferably of a multi-core or multi-thread type capable of executing multiple processing in parallel. The processor 31 may be a processing circuit such as a central processing unit (CPU), a graphics processing unit (GPU), an application specific integrated circuit (Application Specific Integrated Circuit: ASIC), a programmable logic device (for example, a Simple Programmable Logic Device: SPLD), a complex programmable logic device (Complex Programmable Logic Device: CPLD), or a field programmable gate array (Field Programmable Gate Array: FPGA). The processor 31 is not limited to be configured as a single processing circuit, and may be configured as the processor 31 by combining a plurality of processing circuits.

The main memory 32 corresponds to a main storage portion of the computer. The main memory 32 includes a nonvolatile memory region and a volatile memory region. The main memory 32 stores an operating system or an application program in the nonvolatile memory region. The main memory 32 may store data necessary for the processor 31 to execute processing for controlling each unit in the nonvolatile or volatile memory region. The main memory 32 uses the volatile memory region as a work area in which data is appropriately rewritten by the processor 31. The nonvolatile memory region is, for example, a read only memory (ROM). The volatile memory region is, for example, a random access memory (RAM).

The auxiliary storage device 33 corresponds to an auxiliary storage portion of the computer. For example, an electric erasable programmable read-only memory (EEPROM), a hard disk drive (HDD), a solid state drive (SSD), or the like can serve as the auxiliary storage device 33. The auxiliary storage device 33 stores data used for the processor 31 to perform various types of processing, data created by processing in the processor 31, and the like. The auxiliary storage device 33 may store the application program described above.

The clock 34 measures date and time. The processor 31 processes the date and time measured by the clock 34 as the current date and time.

The communication interface 35 performs data communication with the server 13 and the accounting processing apparatus 12 connected through the network 14. The communication interface 35 may also perform data communication with another registration machine 11 connected through the network 14.

The keyboard 36 is an input device in which various keys necessary for inputting data related to a product to be purchased by the customer are arranged.

The scanner 37 is an input device for reading code symbols such as a bar code and a two-dimensional code. The scanner 37 may be of a type that reads code symbols by scanning laser light, or may be of a type that reads code symbols from an image captured by an imaging device.

The touch panel 38 is a display device capable of displaying display elements including characters, symbols, images, and the like on a display. In addition, the touch panel 38 is also an input device that detects a touch operation position on the display by a sensor and performs processing on the assumption that a display element at the position is input. The touch panel 38 displays information to a clerk who is an operator of the registration machine 11, and receives an operation input by the clerk.

The customer display 39 is a display device provided to display information such as a product name and a price of a product registered in the registration machine 11 to the customer 22.

The printer 40 is an output device that prints data related to a purchase receipt, a credit card slip, or the like on a receipt sheet. The receipt paper on which various data are printed by the printer 40 is cut by a cutter and issued from a receipt issuing port. The printer 40 is realized by, for example, a thermal printer, a dot impact printer, or the like.

The card reader 41 is an input device that reads data recorded in a card medium such as a credit card, an electronic money card, or a point card. In a case where the card medium is a magnetic card, the card reader 41 is a magnetic card reader. In a case where the card medium is an IC card, the card reader 41 is an IC card reader. The registration machine 11 may include either one or both of a magnetic card reader and an IC card reader as the card reader 41. The card reader 41 may be a card reader/writer having a function of writing data to a card.

The automatic change machine 42 is a device that processes cash. The automatic change machine 42 includes a paper money insertion port, a paper money discharge port, a coin insertion port, and a coin discharge port. The automatic change machine 42 processes the paper money inserted into the paper money insertion port. The automatic change machine 42 discharges paper money as change from the paper money discharge port. The automatic change machine 42 receives and processes the coins inserted into the coin insertion port. The automatic change machine 42 discharges coins as change from the coin discharge port.

As hardware of the registration machine 11, for example, an existing POS terminal can be used. Note that the devices connected to the registration machine 11 are not limited to the keyboard 36, the scanner 37, the touch panel 38, the customer display 39, the printer 40, and the card reader 41 illustrated in FIG. 2. Devices necessary for the application of the registration machine 11 may be added, or some devices may be omitted.

The registration machine 11 sets a part of a volatile memory region of the main memory 32 as a region of the state table 321. The state table 321 is a region for storing information indicating the states of the plurality of accounting processing apparatuses 12 connected to the registration machine 11.

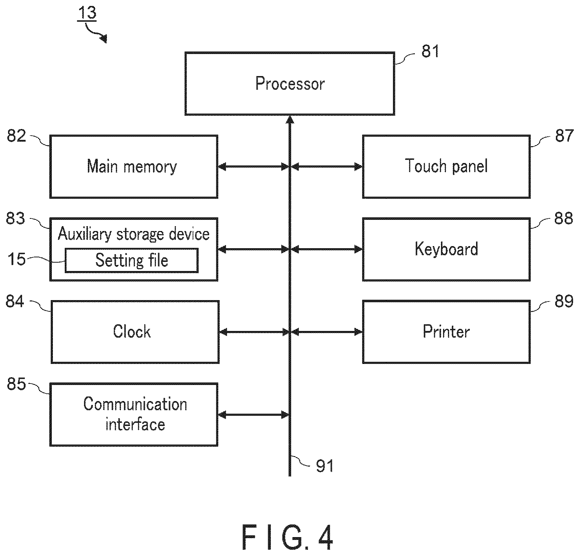

The state table 321 stores the status in association with the accounting machine ID. The status is information indicating the state of the accounting processing apparatus 12 identified by the corresponding accounting machine ID. Specifically, in the status, a value indicating a state in which the accounting processing apparatus 12 can receive the information related to the transaction is set to "0", a value indicating a state in which the accounting processing apparatus 12 is performing the accounting processing is set to "1", and a value indicating a state in which the accounting processing apparatus 12 is standing by after completion of the settlement is set to "2". Furthermore, the status of the accounting processing apparatus 12 that is not the transmission target of the information related to the transaction is "9". Therefore, FIG. 4 illustrates a state table 321 included in the registration machine 11 (111) having the registration machine ID "111". In the state table 321 included in the registration machine 11 (112) having the registration machine ID "112", the status with respect to the accounting processing apparatus 12 (121) having the accounting machine ID "121" is "9", and the status with respect to the other accounting processing apparatuses 12 is "0", "1", or "2".

The registration machine 11 implements a registration program for causing the processor 31 to implement a function for registering a product of the customer by the operation of the clerk 21 and transmitting the product to be purchased to the information accounting processing apparatus 12 related to the product. The registration program is a type of application software, and is installed in the auxiliary storage device 33. The registration program may be installed in the main memory 32. A method of installing the registration program in the main memory 32 or the auxiliary storage device 33 is not particularly limited. The registration program can be installed in the main memory 32 or the auxiliary storage device 33 by recording the accounting program on a removable recording medium or distributing the registration program by communication through a network. The form of the recording medium is not limited as long as the recording medium can store a program such as an SD memory card or a USB memory and can be read by a device.

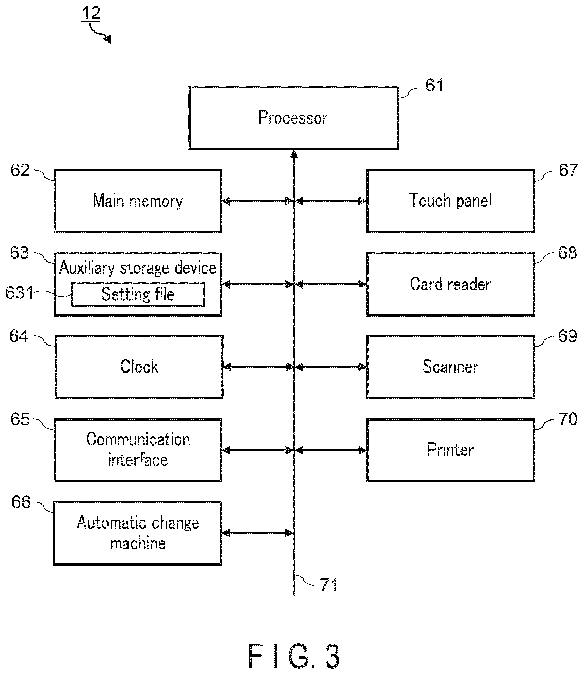

FIG. 3 is a block diagram illustrating a main circuit configuration of the accounting processing apparatus 12. The accounting processing apparatus 12 includes a processor 61, a main memory 62, an auxiliary storage device 63, a clock 64, a communication interface 65, an automatic change machine 66, a touch panel 67, a card reader 68, a scanner 69, a printer 70, a system transmission path 71, and the like. The system transmission path 71 includes an address bus, a data bus, a control signal line, and the like. The system transmission path 71 connects the processor 61 and other units directly or through a signal input/output circuit, and transmits data signals exchanged therebetween.

The accounting processing apparatus 12 configures a computer by connecting the processor 61 to the main memory 62, the auxiliary storage device 63, the clock 64, and the communication interface 65 through the system transmission path 71. Then, the accounting processing apparatus 12 connects devices such as the automatic change machine 66, the touch panel 67, the card reader 68, the scanner 69, and the printer 70 to the computer through the system transmission path 71.

The processor 61 corresponds to a central part of the computer. The processor 61 controls each unit to realize various functions as the accounting processing apparatus 12 according to an operating system or an application program. The processor 61 is preferably of a multi-core or multi-thread type capable of executing a plurality of processing in parallel. The processor 61 is, for example, a CPU.

The main memory 62 corresponds to a main storage portion of the computer. The main memory 62 includes a nonvolatile memory region and a volatile memory region. The main memory 62 stores an operating system or an application program in the nonvolatile memory region. The main memory 62 may store data necessary for the processor 61 to execute processing for controlling each unit in the nonvolatile or volatile memory region. The main memory 62 uses the volatile memory region as a work area in which data is appropriately rewritten by the processor 61. The non-volatile memory region is, for example, a ROM. The volatile memory region is, for example, a RAM.

The auxiliary storage device 63 corresponds to an auxiliary storage portion of the computer. For example, an EEPROM, an HDD, an SSD, or the like can be the auxiliary storage device 63. The auxiliary storage device 63 stores data used for the processor 61 to perform various types of processing, data created by processing in the processor 61, and the like. The auxiliary storage device 63 may store the application program described above.

In addition, the auxiliary storage device 63 stores a setting file 631 including screen setting data indicating which of a first accounting screen including a button (for example, a "return" button to be described later) for receiving a display switching instruction on the product registration screen and a second accounting screen not including a button ("return" button) is to be displayed on the accounting screen (for example, a payment method selection screen to be described later) . The first accounting screen and the second accounting screen are switched according to the setting of "display/no display" of the "return" button indicated by the screen setting data.

The screen setting data may be set in advance in the setting processing by the operation of an administrator or the like, for example, or can be changed by an operation on a screen change button for receiving a switching instruction of the accounting screen provided on the product registration screen, for example, during operation (operation) of the accounting processing apparatus 12.

The clock 64 clocks the date and time. The processor 61 processes the date and time measured by the clock 64 as the current date and time.

The communication interface 65 performs data communication with the server 13 or the registration machine 11 connected through the network 14. The communication interface 65 can also perform data communication with another accounting processing apparatus 12 connected through the network 14.

The automatic change machine 66 is a device that processes cash. The automatic change machine 66 has a paper money insertion port, a paper money discharge port, a coin insertion port, and a coin discharge port. The automatic change machine 66 processes the paper money inserted into the paper money insertion port. The automatic change machine 66 discharges paper money as change from the paper money discharge port. The automatic change machine 66 receives and processes the coins inserted into the coin insertion port. The automatic change machine 66 discharges coins as change from the coin discharge port.

The touch panel 67 is a display device capable of displaying display elements including characters, symbols, images (including buttons), and the like on a display. In addition, the touch panel 67 is also an input device that detects a touch operation position on the display by a sensor and performs processing on the assumption that a display element at the position is input. The touch panel 67 displays information to a customer who is an operator of the accounting processing apparatus 12, and receives an operation input by the customer.

The card reader 68 is an input device that reads data recorded in a card medium such as a credit card, an electronic money card, or a point card. In a case where the card medium is a magnetic card, the card reader 68 is a magnetic card reader. In a case where the card medium is an IC card, the card reader 68 is an IC card reader. The accounting processing apparatus 12 may include either one or both of a magnetic card reader and an IC card reader as the card reader 68. The card reader 68 may be a card reader/writer having a function of writing data to a card.

The scanner 69 is an input device for reading code symbols such as a bar code and a two-dimensional code. The scanner 69 may be of a type that reads code symbols by scanning laser light, or may be of a type that reads code symbols from an image captured by an imaging device.

The printer 70 is an output device that prints data related to a purchase receipt, a credit card slip, or the like on a receipt sheet. The receipt paper on which various data are printed by the printer 70 is cut by a cutter and issued from a receipt issuing port. The printer 70 is realized by, for example, a thermal printer, a dot impact printer, or the like.

As hardware of such an accounting processing apparatus 12, for example, an existing full-self-POS terminal can be used. The device connected to the accounting processing apparatus 12 is not limited to the automatic change machine 66, the touch panel 67, the card reader 68, the scanner 69, and the printer 70 illustrated in FIG. 3. Devices necessary for the application of the accounting processing apparatus 12 may be added, or some devices may be omitted.

The accounting processing apparatus 12 implements an accounting program for causing the processor 61 to realize both functions of a registration machine that registers a product of a customer and an accounting machine that receives payment for the product and settles a buying and selling transaction with the customer. The accounting program is a type of application software, and is installed in the auxiliary storage device 63. The accounting program may be installed in the main memory 62. A method of installing the accounting program in the main memory 62 or the auxiliary storage device 63 is not particularly limited. The accounting program can be installed in the main memory 62 or the auxiliary storage device 63 by recording the accounting program on a removable recording medium or distributing the accounting program by communication through a network. The form of the recording medium is not limited as long as the recording medium can store a program such as an SD memory card or a USB memory and can be read by a device.

The registration machine 11 transmits the information related to the transaction of the registered product to the accounting processing apparatus 12 in a state in which the information related to the transaction can be received, that is, the accounting processing apparatus 12 whose status is **"0".** Upon receiving the information related to the transaction of the product, the accounting processing apparatus 12 transmits a data signal of an accounting start response to the registration machine 11 in order to operate as an accounting machine of the semi-self-method (hybrid POS device). In this case, the accounting processing apparatus 12 executes the accounting processing based on the information related to the transaction of the product received from the registration machine 11.

In addition, in a case where the accounting processing apparatus 12 receives an input operation by the customer 22 while the standby screen is being displayed in a state where the accounting processing apparatus has not received the information related to the transaction of the product registered from the registration machine 11, the accounting processing apparatus 12 transmits a data signal of an accounting start response to the registration machine 11 in order to operate as a full-self POS apparatus of the full-self-method. In this case, the accounting processing apparatus 12 executes the accounting processing based on the information related to the product to be purchased received by the operation of the customer 22 through the product registration screen.

The accounting processing apparatus 12 that has completed the accounting processing transmits a data signal of an accounting end response to the registration machine 11.

Upon receiving the data signal of the accounting start response from the accounting processing apparatus 12, the registration machine 11 changes a value of the status indicating the state of the accounting processing apparatus 12 from "0" to "1". Upon receiving the data signal of the accounting end response from the accounting processing apparatus 12, the registration machine 11 changes the value of the status indicating the state of the accounting processing apparatus 12 from "1" to "0". The accounting processing apparatus 12 whose status value has been changed to "0" can be a transmission destination of information related to a transaction in the registration machine 11.

FIG. 4 is a block diagram illustrating a main circuit configuration of the server 13. The server 13 includes a processor 81, a main memory 82, an auxiliary storage device 83, a clock 84, a communication interface 85, a touch panel 87, a keyboard 88, a printer 70, a system transmission path 91, and the like. The system transmission path 71 includes an address bus, a data bus, a control signal line, and the like. The system transmission path 91 connects the processor 81 and other units directly or through a signal input/output circuit, and transmits data signals exchanged therebetween.

The server 13 configures a computer by connecting the processor 81 to the main memory 82, the auxiliary storage device 83, the clock 84, and the communication interface 85 through the system transmission path 71. Then, the server 13 connects devices such as the touch panel 87, the keyboard 88, and the printer 70 to the computer through the system transmission path 71.

The processor 81 corresponds to a central part of the computer. The processor 81 controls each unit to realize various functions as the server 13 according to an operating system or an application program. The processor 81 is preferably of a multi-core or multi-thread type capable of executing a plurality of processing in parallel. The processor 81 is, for example, a CPU.

The main memory 82 corresponds to a main storage portion of the computer. The main memory 82 includes a nonvolatile memory region and a volatile memory region. The main memory 82 stores an operating system or an application program in the nonvolatile memory region. The main memory 82 may store data necessary for the processor 81 to execute processing for controlling each unit in the nonvolatile or volatile memory region. The main memory 82 uses the volatile memory region as a work area in which data is appropriately rewritten by the processor 81. The non-volatile memory region is, for example, a ROM. The volatile memory region is, for example, a RAM.

The auxiliary storage device 83 corresponds to an auxiliary storage portion of the computer. For example, an EEPROM, an HDD, an SSD, or the like can be the auxiliary storage device 83. The auxiliary storage device 83 stores data used for the processor 81 to perform various types of processing, data created by processing in the processor 81, and the like. The auxiliary storage device 83 may store the application program described above.

In addition, the auxiliary storage device 83 stores a setting file 15 including screen setting data for a plurality of accounting processing apparatuses 12 connected through the network 14. The setting files (screen setting data) stored in the accounting processing apparatus 12 may be individually set by the operation of the clerk 21 or the like on the accounting processing apparatus 12 (for example, an operation on the screen change button provided on the product registration screen), or may be collectively set for the plurality of accounting processing apparatuses 12 by the operation of the administrator or the like by the setting processing in the server 13. The setting file set in the accounting processing apparatus 12 includes screen setting data for the accounting processing apparatus 12. The screen setting data set in the server 13 is transmitted to the accounting processing apparatus 12 of a carbon copy (CC). The data is stored as a setting file in each accounting processing apparatus 12.

The clock 84 clocks the date and time. The processor 81 processes the date and time measured by the clock 84 as the current date and time.

The communication interface 85 performs data communication with the server 13 or the registration machine 11 connected through the network 14. The communication interface 85 can also perform data communication with another server 13 connected through the network 14.

The touch panel 87 is a display device capable of displaying display elements including characters, symbols, images (including buttons), and the like on a display. In addition, the touch panel 87 is also an input device that detects a touch operation position on the display by a sensor and performs processing on the assumption that a display element at the position is input. The touch panel 87 displays information to a customer who is an operator of the server 13, and receives an operation input by the customer.

The keyboard 88 is an input device operated by an administrator or the like. The printer 70 is an output device that prints various data stored in the server 13.

As hardware of such a server 13, for example, an existing personal computer can be used. Note that the devices connected to the server 13 are not limited to the touch panel 87, the keyboard 88, and the printer 70 illustrated in FIG. 4. Devices necessary for the application of the server 13 may be added, or some devices may be omitted.

### (Description of Operation)

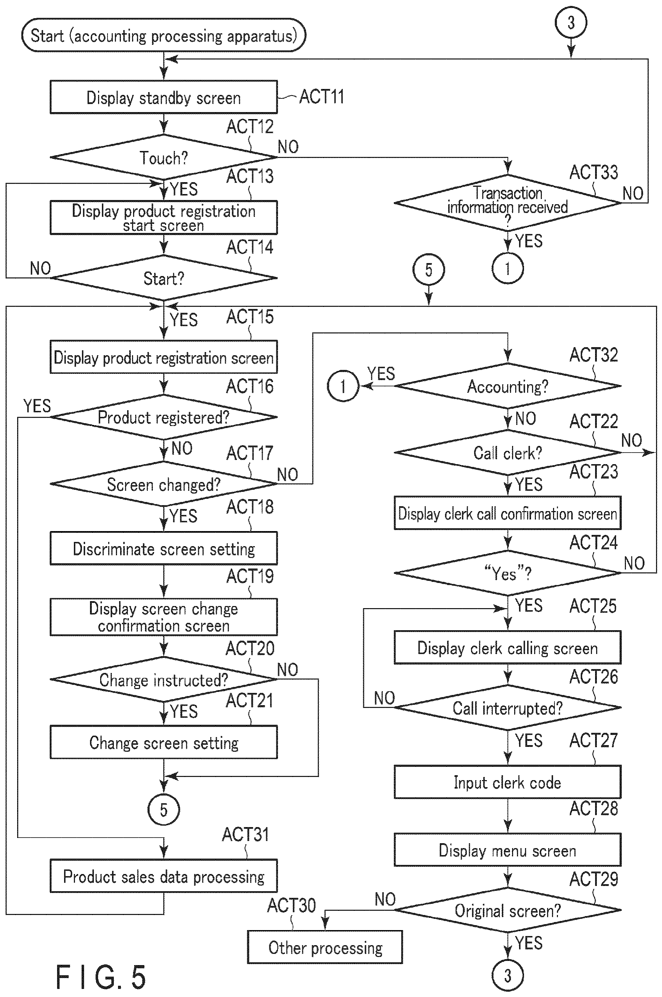

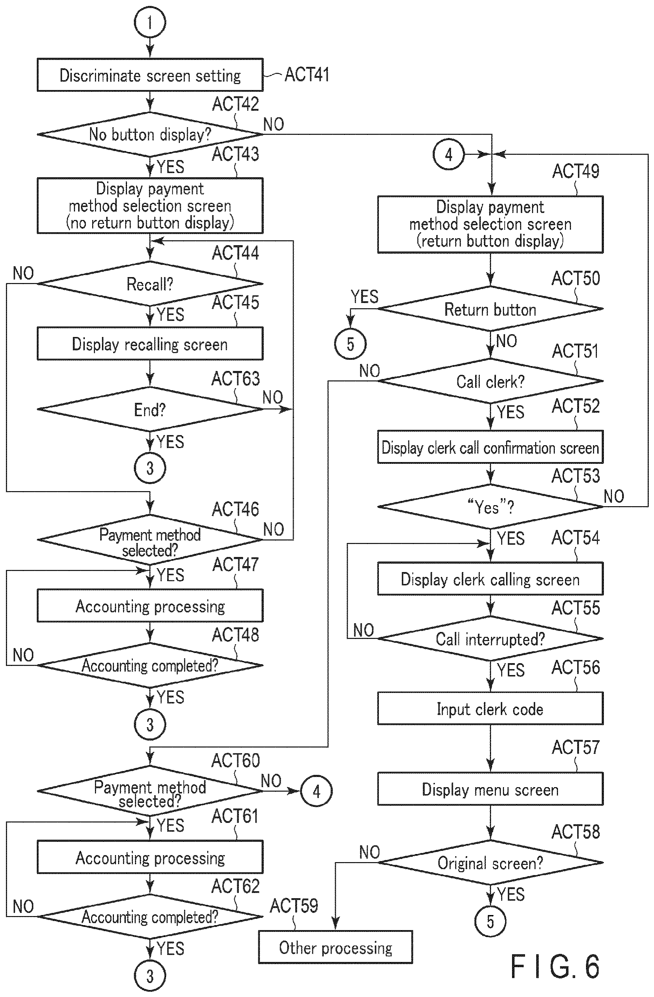

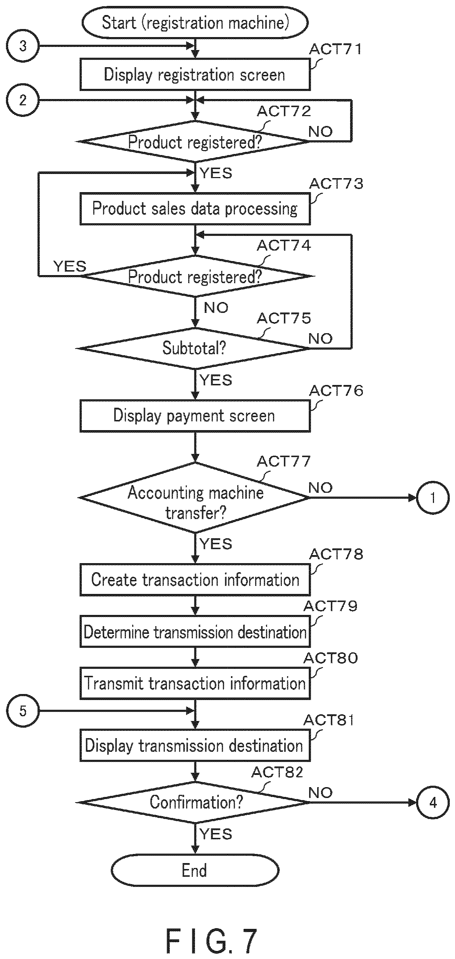

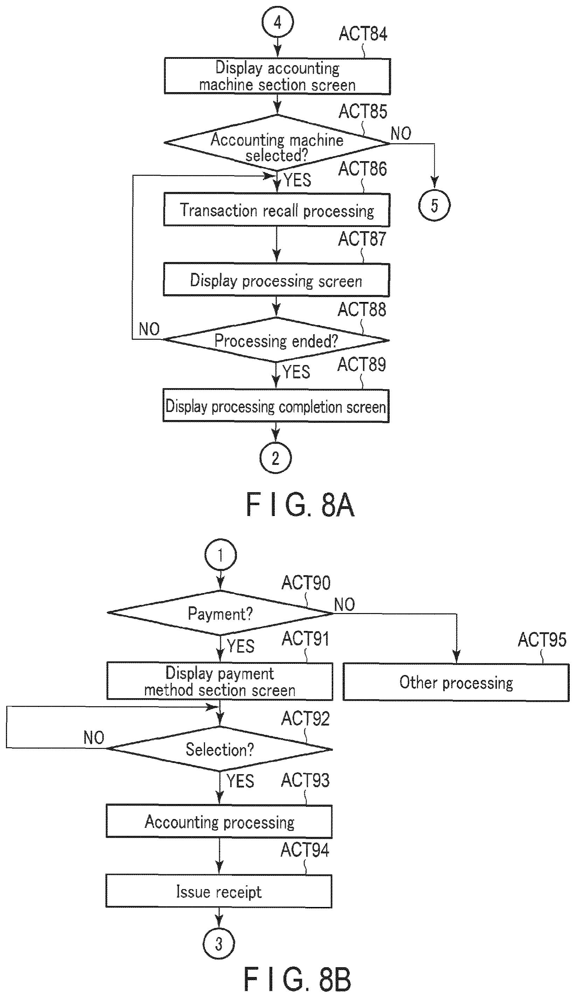

FIGS. 5 and 6 are flowcharts illustrating main procedures of information processing executed by the processor 61 of the accounting processing apparatus 12 according to the accounting program. FIGS. 7, 8A, and 8B are flowcharts illustrating main procedures of information processing executed by the processor 31 of the registration machine 11 according to the registration program. Main operations of the accounting system 10 will be described below with reference to the drawings. Note that the procedure and content of the information processing described below are an example. The procedure and content are not particularly limited as long as similar results can be obtained.

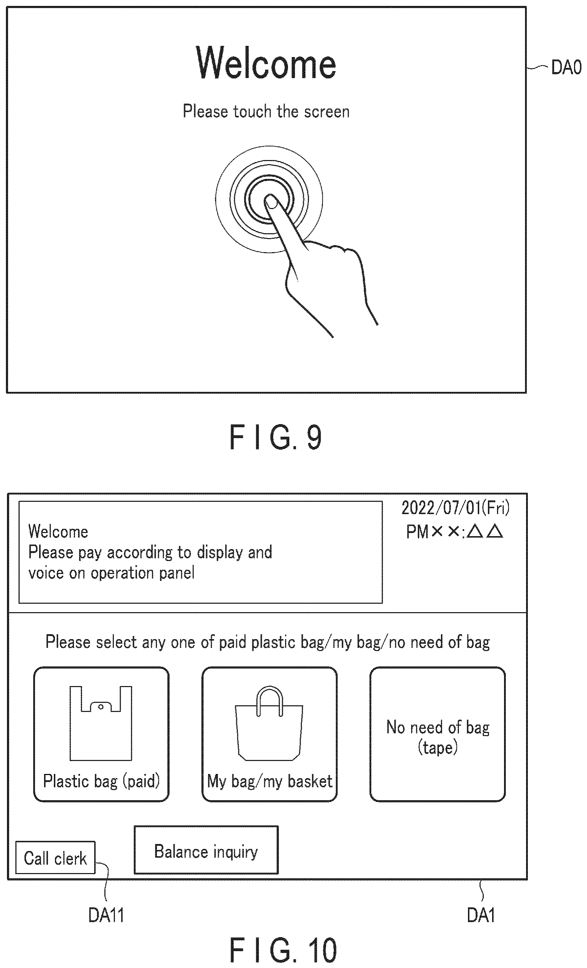

First, a setting operation of the setting file (screen setting data) before the start of operation in the accounting processing apparatus 12, that is, a setting operation of "display/no display" of the "return" button on the payment selection screen will be described. FIGS. 9 to 17 are diagrams illustrating an example of a display screen on the touch panel 67 of the accounting processing apparatus 12.

The processor 61 of the accounting processing apparatus 12 in a standby state causes the touch panel 67 to display a standby screen DA0 (FIG. 5, ACT11). FIG. 9 is a diagram illustrating an example of the standby screen DA0 in the accounting processing apparatus 12. On the standby screen DA0, for example, a message "Welcome/Please touch screen" for prompting the customer 22 to operate the touch panel 67 is displayed.

Upon detection of a touch operation on the touch panel 67 (ACT12, YES), the processor 61 displays a product registration start screen DA1 on the touch panel 67 (ACT13). FIG. 10 is a diagram illustrating an example of a product registration start screen in the accounting processing apparatus 12. The product registration start screen DA1 is provided with, for example, a button for causing the customer 22 to select paid plastic bag/my bag/no need of bag before registering the product, and a "call clerk" button DA11.

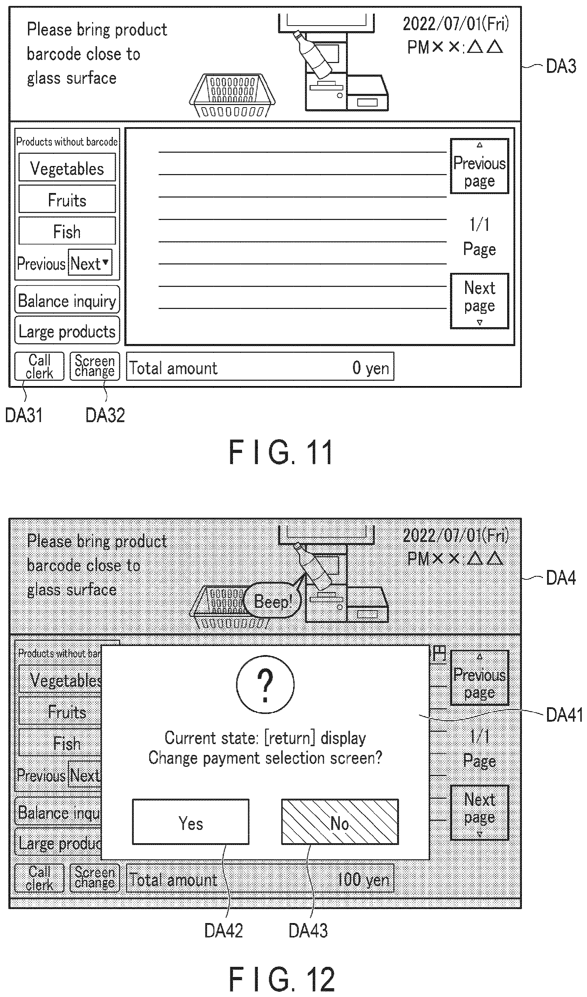

Upon detection of the touch operation on the button for selecting paid plastic bag/my bag/no need of bag (ACT14, YES), the processor 61 causes a product registration screen DA3 to be displayed on the touch panel 67 (ACT15). FIG. 11 is a diagram illustrating an example of the product registration screen DA3 in the accounting processing apparatus 12. The product registration screen DA3 is a screen in which a detail region and a total region are arranged. The detail region is a region for displaying the product name, the number, the unit price, and the amount of the products in a list form in order of a series of numbers. Note that the items displayed in the detail region are not limited to the product name, the number, the unit price, and the amount. Other items may be added, or any item, for example, the amount of money may be omitted. The total region is a region for displaying the total number (points) and the total amount (yen) displayed in the detail region. Note that the items displayed in the total region are not limited to the total number and the total amount. Other items may be added, or any item, for example, the total number of items may be omitted.

In addition, the product registration screen DA3 is provided with a "call clerk" button DA31 and a screen change button DA32. The screen change button DA32 is a button for instructing switching between a first accounting screen including a "return" button for receiving an instruction to switch the display on the product registration screen and a second accounting screen not including the "return" button on the accounting screen (for example, a payment method selection screen to be described later). The screen setting data is changed in accordance with the operation on the screen change button DA32, and "display/no display" of the "return" button is switched.

Upon detection of the touch operation on the screen change button DA32 of the product registration screen DA3 (ACT16, NO → ACT17, YES), the processor 61 refers to the screen setting data set in the setting file 631, and discriminates which one of "display/no display" (first accounting screen/second accounting screen) of the "return" button is set (ACT18).

Note that, in the screen setting data set in the setting file 631, the setting contents by the operation of the administrator or the like may be always held at the time of powering on the accounting processing apparatus 12, or the setting contents set at the time of the previous operation may be held.

The processor 61 causes a screen change confirmation screen to be displayed on the touch panel 67 according to the setting contents indicated by the screen setting data (ACT19).

For example, in a case where it is discriminated that the screen setting data indicates the screen setting of "display" (first accounting screen) of the "return" button, the processor 61 causes the screen change confirmation screen to be displayed as illustrated in FIG. 12. On a screen change confirmation screen DA4 illustrated in FIG. 12, a message "There is [return] display" indicating the current state is displayed. Here, upon detecting a touch operation on the "Yes" button DA42 on the screen change confirmation screen, the processor 61 changes the setting contents indicated by the screen setting data to "no display" (second accounting screen) of the "return" button (ACT21). Upon detecting the touch operation on the "NO" button DA43 on the screen change confirmation screen, the processor 61 returns to the display state of the product registration screen DA3 without changing the screen setting data (ACT15).

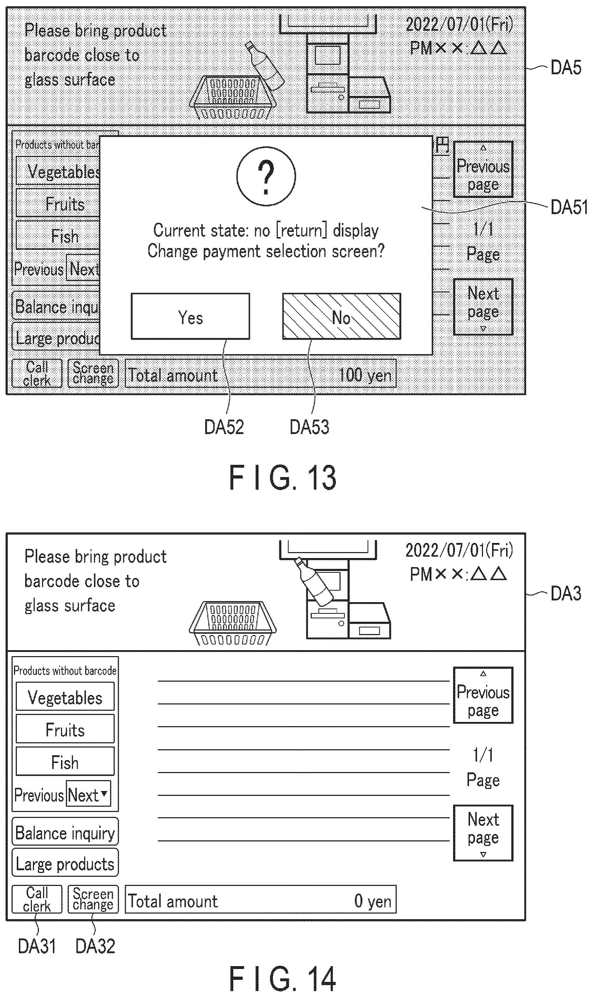

On the other hand, in ACT18, in a case where it is discriminated that the screen setting data indicates the screen setting of "no display" (second accounting screen) of the "return" button, the processor 61 causes the screen change confirmation screen to be displayed as illustrated in FIG. 13. On the screen change confirmation screen DA5 illustrated in FIG. 13, a message "No [return] display" indicating the current state is displayed. Here, upon detecting a touch operation on the "Yes" button DA52 on the screen change confirmation screen, the processor 61 changes the setting contents indicated by the screen setting data to "display" (first accounting screen) of the "return" button (ACT21). Upon detecting the touch operation on the "NO" button DA53 on the screen change confirmation screen, the processor 61 returns to the display state of the product registration screen DA3 without changing the screen setting data (ACT15).

FIG. 14 is a diagram illustrating an example of the product registration screen DA3 after the screen change confirmation screen is displayed. In this way, after the setting operation of the setting file (screen setting data) is completed, the "call clerk" button DA31 is operated to return to the original screen (standby screen). Note that the screen may return to the original screen (standby screen) in a case where a predetermined time has elapsed.

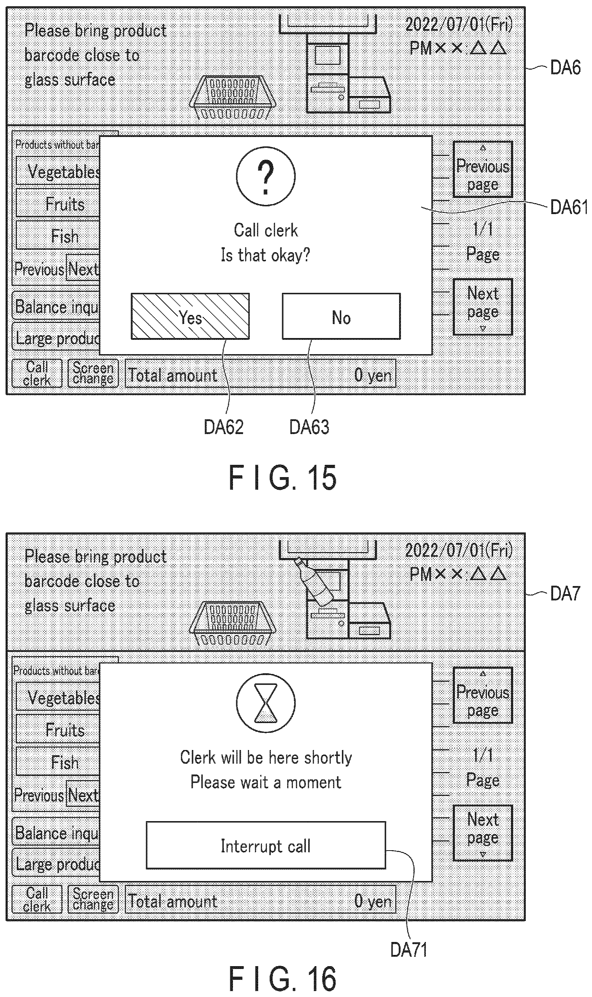

Upon detection of a touch operation on the "call clerk" button DA31 on the product registration screen DA3 (ACT16, NO → ACT17, NO → ACT32, NO → ACT22, YES), the processor 61 causes the touch panel 67 to display a clerk call confirmation screen (ACT23). FIG. 15 is a diagram illustrating an example of a clerk call confirmation screen DA6.

Upon detection of a touch operation on the "NO" button DA63 on the clerk call confirmation screen DA6 (ACT24, NO), the processor 61 returns to the display state of the product registration screen DA3 illustrated in FIG. 14 (ACT15). On the other hand, upon detection of a touch operation on the "YES" button D62 on the clerk call confirmation screen (ACT24, YES), the processor 61 causes a clerk calling screen to be displayed on the touch panel 67 (ACT25). FIG. 16 is a diagram illustrating an example of a clerk calling screen DA7.

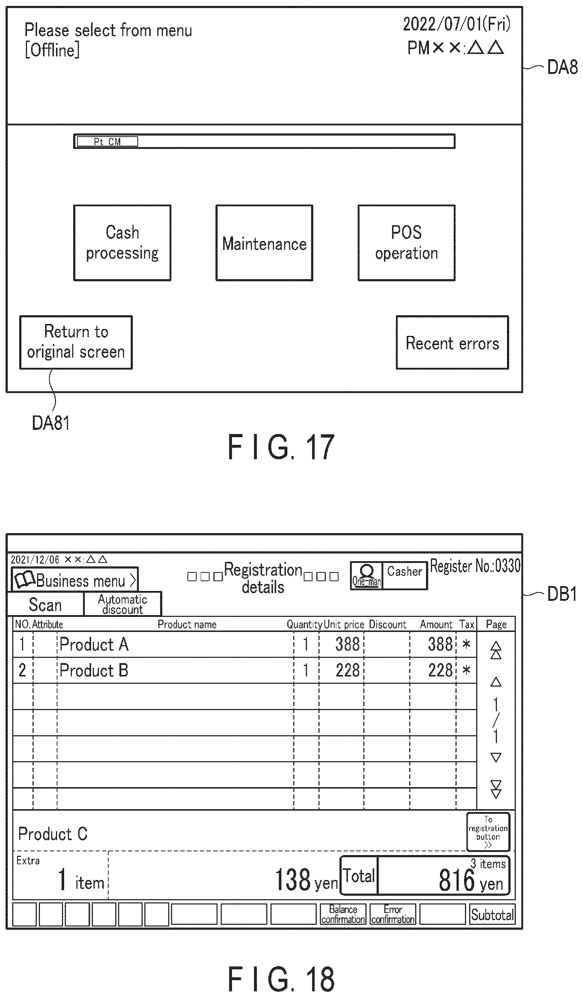

Upon detection of a touch operation on an "interrupt a call" button DA71 on the clerk calling screen DA7 (ACT26, YES), the processor 61 enters a wait state for inputting a clerk code. For example, the clerk code is input by causing the scanner 69 to read a clerk barcode assigned to each clerk (ACT27). Upon confirmation that the clerk code read by the scanner 69 is a valid code, the processor 61 causes the touch panel 67 to display a management menu screen DA8 (ACT28). FIG. 17 is a diagram illustrating an example of a management menu screen DA8.

For example, buttons of "cash processing", "maintenance", and "POS operation" are provided on the management menu screen DA8, and in a case where the buttons are operated (ACT29, NO), the processor 61 executes various types of management processing (other processing) corresponding to the buttons (ACT30).

Here, since the "call clerk" button DA31 is operated to return to the original screen (standby screen), the touch operation is performed on the "return to original screen" button DA81 of the management menu screen DA8. Upon operating the "return to original screen" button DA81 (ACT29, YES), the processor 61 returns to the state of displaying the standby screen DA0 illustrated in FIG. 9 (ACT11).

In this way, in the accounting processing apparatus 12, by operating the screen change button DA32 provided on the product registration screen DA3, it is possible to easily execute setting (change of screen setting) of "display/no display" (first accounting screen/second accounting screen) of the "return" button on the accounting screen (payment method selection screen) with respect to the screen setting data of the setting file 631.

Next, operations of the registration machine 11 and the accounting processing apparatus 12 in a case where the accounting system 10 is operated by the semi-self-method will be described.

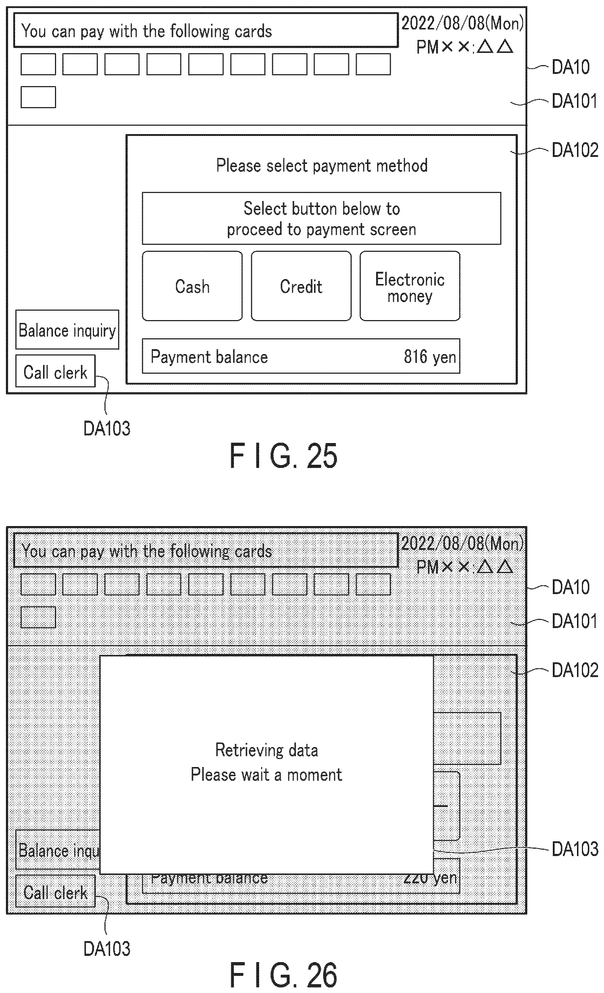

For example, in a case where the store is congested and there is a customer 22 who waits for payment by the accounting processing apparatus 12 at the time of operating by the full-self-method, the accounting system 10 is operated by the semi-self-method to register the product in the registration machine 11 by the operation of the clerk 21, and is operated as the accounting machine (hybrid POS device) of the accounting processing apparatus 12, and the accounting processing is executed by the operation of the customer 22. FIGS. 18 to 24 are diagrams illustrating examples of display screens on the touch panel 38 of the registration machine 11. FIGS. 25 to 31 are diagrams illustrating examples of display screens on the touch panel 67 of the accounting processing apparatus 12.

The processor 31 of the registration machine 11 in the standby state causes a registration screen to be displayed on the touch panel 38 (FIG. 7, ACT71). FIG. 18 is a diagram illustrating an example of the registration screen DB1 in the registration machine 11. FIG. 18 illustrates a state in which some products have already been registered.

The registration screen DB1 is a screen in which a detail region and a total region are arranged. The detail region is a region for displaying the product name, the number, the unit price, and the amount of the products in a list form in order of a series of numbers. Note that the items displayed in the detail region are not limited to the product name, the number, the unit price, and the amount. Other items may be added, or any item, for example, the amount of money may be omitted. The total region is a region for displaying the total number (points) and the total amount (yen) displayed in the detail region. Note that the items displayed in the total region are not limited to the total number and the total amount. Other items may be added, or any item, for example, the total number of items may be omitted.

The processor 31 displaying the registration screen waits for product registration. A barcode representing a product code which is identification information of the product is attached to many products. Therefore, upon receiving an offer of accounting of the product from the customer 22, the clerk 21 operates the scanner 37 to read the barcode attached to the product. The barcode is read by the scanner 37 so that the product code of the product is input to the registration machine 11 (product registration). On the other hand, barcodes may not be attached to some products such as fresh food. In a case where the barcode is not attached to the product, the clerk 21 operates a softkey corresponding to the product, a so-called product key, from a softkey group of products without a barcode displayed on a part of the registration screen. Upon operation of the product key, the product code of the product corresponding to the product key is input to the registration machine 11. In this way, upon inputting the product code of the product to the registration machine 11, the processor 31 determines that the product has been registered.

In a case where it is determined that there is product registration (ACT72, YES), the processor 31 executes product sales data processing (ACT73). Specifically, the processor 31 searches a product file, and acquires product data such as the product name and the unit price of the product identified by the product code input through the scanner 37 or the touch panel 38. Then, the processor 31 stores product sales data including items such as a product code, a product name, a unit price, a sales volume, and a sales amount in the transaction memory. The transaction memory is a part of a volatile memory region in the main memory 32.

The processor 31 that has completed the product sales data processing waits whether there is product registration for the next product or subtotal output is instructed. The subtotal output is indicated by operating a subtotal key. The subtotal key may be a hard key arranged on the keyboard 36 or a soft key arranged on the registration screen.

In a case where there is another product registration (ACT74, YES), the clerk 21 also performs the registration operation as described above for the product. The processor 31 executes product sales data processing (ACT73). Then, upon completion of the registration operation for all the products, the clerk 21 operates the subtotal key.

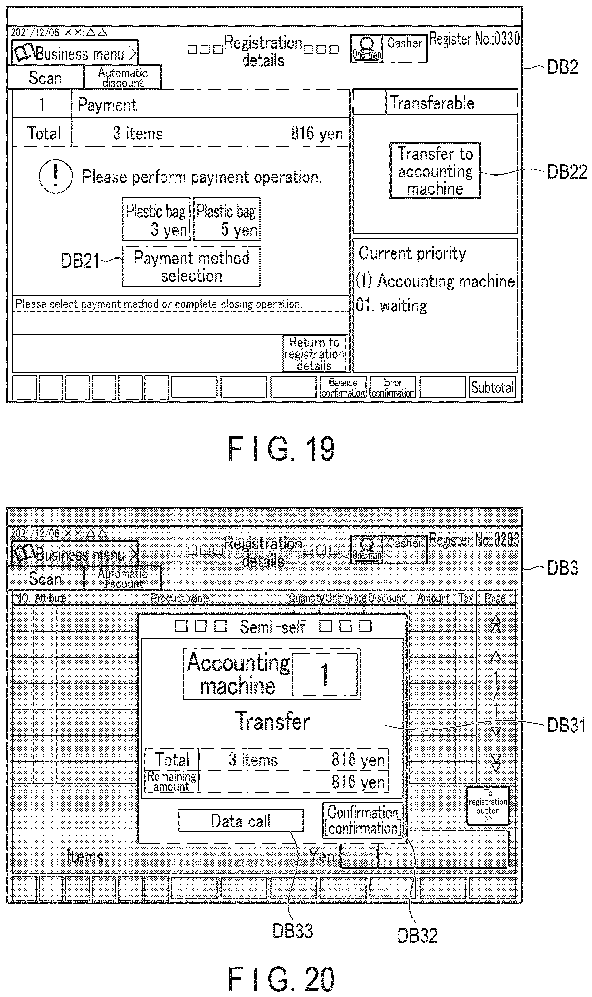

In a case where subtotal output is instructed by the operation of the subtotal key (ACT75, YES), the processor 31 causes a payment screen DB2 for the product to be displayed on the touch panel 38 based on the product sales data acquired by the product sales data processing. FIG. 19 is a diagram illustrating an example of the payment screen DB2. The payment screen DB2 displays a subtotal amount obtained by adding the sales amount of the product sales data saved in the transaction memory by the product sales data processing and the number of the products. In addition, the payment screen DB2 is provided with a "payment method selection" button DB21 for instructing execution of accounting processing in the registration machine 11, and an "accounting machine transfer" button DB22 for causing the accounting processing apparatus 12 to execute accounting processing by the operation of the customer 22.

In the payment screen DB2, in a case where an operation different from the "payment method selection" button DB21 or the "accounting machine transfer" button DB22 is performed (ACT77, NO → FIG. 8B, ACT90, NO), the processor 31 executes other processing corresponding to each button (ACT95).

Next, a case where accounting processing is executed in the registration machine 11 will be described.

Upon receiving an instruction to perform the accounting processing in the registration machine 11 by the operation on the "payment method selection" button DB21 (ACT77, NO → FIG. 8B, ACT90, YES), the processor 31 causes a payment method selection screen to be displayed on the screen of the touch panel 38 (ACT91). On the payment method selection screen, for example, software keys of a cash key, a credit key, an electronic money key, and a code payment key are displayed. A customer who pays in cash operates a cash key and inserts the cash into the automatic change machine. A customer who pays with a credit card operates the credit key and causes the card reader 41 to read credit card data. A customer who pays with electronic money operates the electronic money key to read data of the electronic money card by the card reader. The customer who pays by code payment operates the code payment key and causes the scanner 37 to read the code for payment displayed on a smartphone.

For example, the processor 31 displaying the payment method selection screen waits for selection of any payment method of a cash key, a credit key, an electronic money key, and a code payment key. Upon performing an operation to select one of the keys (ACT92, YES), the processor 31 executes accounting processing (ACT93). For example, in a case where the cash key is operated, the processor 31 executes the cash accounting processing based on the cash input to the automatic change machine 42. For example, in a case where the credit key is operated, the processor 31 executes credit accounting processing based on credit card data read by the card reader 41. For example, in a case where the electronic money key is operated, the electronic money accounting processing is executed based on the data of the electronic money card read by the card reader 41. For example, in a case where the code payment key is operated, the code accounting processing is executed based on the payment code read by the scanner 37. Since these types of accounting processing are all well-known processing, a detailed description thereof will be omitted here.

Upon completion of the accounting processing, the processor 31 controls the printer 40 to issue a receipt (ACT94). Then, after issuance of the receipt, the processor 31 enters a standby state after completion of the receipt issuance processing. Therefore, since the screen of the touch panel 38 is a standby screen, the next customer can start payment for the transaction.

Next, a case where transaction information is transmitted from the registration machine 11 and accounting processing is executed in the accounting processing apparatus 12 will be described.

In a case where the accounting processing in the accounting processing apparatus 12 is instructed by the operation on the "accounting machine transfer" button DB22 of the payment screen DB2 displayed in ACT76 (ACT77, YES), the processor 31 of the registration machine 11 creates information (transaction information) related to a transaction for the accounting processing (ACT78). For example, the processor 31 creates a transaction information file describing the product sales data of the product stored in the transaction memory and transaction identification data such as a transaction number, a transaction date and time, and a registration machine ID. Note that the information regarding the transaction is not limited to the transaction information file described above. In short, the information regarding the transaction may be any information as long as the accounting processing apparatus 12 can settle the transaction of the product.

The processor 31 that has created the transaction information file refers to the state table 321 and determines the accounting processing apparatus 12 to be the transmission destination of the information related to the transaction. Specifically, the processor 31 selects the accounting machine ID whose status value is "0" from the state table 321. At this time, in a case where two or more accounting machine IDs are selected, the processor 31 selects one of the accounting machine IDs according to a predetermined rule. For example, the accounting machine ID having the longest elapsed time from the last selection is selected. The processor 31 determines the accounting processing apparatus 12 with the selected accounting machine ID as the transmission destination of the information related to the transaction. The payment screen DB2 illustrated in FIG. 19 displays that "accounting machine 01" is determined as the accounting processing apparatus 12 to be the transmission destination.

The processor 31 that has determined the transmission destination of the information regarding the transaction controls the communication interface 35 to transmit the information regarding the transaction (transaction information file) to the accounting processing apparatus 12 as the transmission destination. With this control, the transaction information file is transmitted through the network 14 (ACT80) and received by the accounting processing apparatus 12 as a transmission destination.

In the standby state, as illustrated in FIG. 9 described above, the accounting processing apparatus 12 causes a standby screen DA0 to be displayed on the touch panel 67 (FIG. 5, ACT11). Here, in a case where the transaction information file is received from the registration machine 11 (ACT12, NO→ACT33, YES), the processor 61 of the accounting processing apparatus 12 refers to the screen setting data of the setting file 631 and discriminates the screen setting of "display/no display" of the "return" button on the accounting screen (payment method selection screen to be described later) (FIG. 6, ACT41).

For example, upon discriminating that the "return" button is "no display" based on the screen setting data (ACT42, YES), the processor 61 causes a payment selection screen (second accounting screen) not including the "return" button to be displayed on the touch panel 67. FIG. 25 is a diagram illustrating an example of a payment selection screen DA10 that does not include the "return" button. The payment selection screen DA10 is provided with a card list DA101, a payment method selection key DA102, and a "call clerk" button DA103 for displaying a list of card types usable for the accounting processing by, for example, a logo of a card company. In the payment method selection key DA102 illustrated in FIG. 25, for example, any one of "cash", "credit", and "electronic money" can be selected as a payment method to perform accounting processing. Here, the processor 61 of the accounting processing apparatus 12 enters an operation waiting state for the payment selection screen DA10.

On the other hand, after transmitting the transaction information file to the accounting processing apparatus 12, the processor 31 of the registration machine 11 causes a transmission completion screen DB3 of the transaction information file to be displayed on the touch panel 38 (ACT81). FIG. 20 is a diagram illustrating an example of the transmission completion screen DB3. In the transmission completion screen DB3, the number "1" indicating the accounting machine ID "accounting machine 01" of the accounting processing apparatus 12 as the transmission destination is displayed as the transmission destination information DB31 of the transaction information file. Also, the transmission completion screen DB3 is provided with a confirmation [confirmation] key DB32 and a "data retrieval" key DB33.

The clerk 21 who has confirmed the display of the transmission completion screen DB3 instructs the customer 22 to perform accounting with the accounting processing apparatus 12 of the register number N, and operates the confirmation [confirmation] key DB32. Upon detecting the operation of the confirmation [confirmation] key DB32 (ACT82, YES), the processor 31 ends the processing for the product of the customer 22 and returns to the standby state. That is, the processor 31 causes a registration screen to be displayed on the touch panel 38. Therefore, upon receiving an offer of accounting of the product from the next customer, the clerk can start the registration operation of the product.

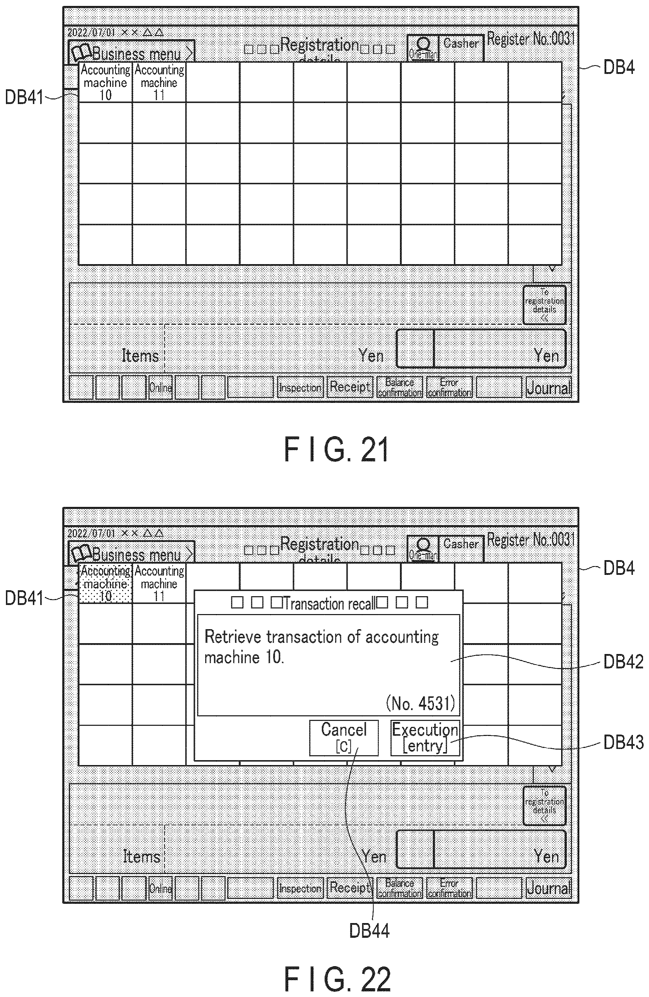

On the other hand, upon detecting the operation of the "data retrieval" key DB33 of the transmission completion screen DB3 (ACT82, NO), the processor 31 causes the touch panel 38 to display an accounting machine selection screen DB4 for selecting the accounting processing apparatus 12 (accounting machine) to be the data retrieval target (FIG. 8A, ACT84). FIG. 21 is a diagram illustrating an example of the accounting machine selection screen DB4. In the accounting machine selection screen DB4, an accounting processing apparatus 12 (accounting machine) which is a transmission destination of the transaction information file from the registration machine 11 is displayed as a list display DB41. In the list display DB41 of the accounting machine selection screen DB4 illustrated in FIG. 21, for example, two "accounting machines 10" and "accounting machines 11" are displayed.

Here, in a case where there is an operation of selecting any accounting machine (accounting processing apparatus 12) from the list display DB41, the processor 31 causes a call confirmation guidance DB42 to be displayed. FIG. 22 is a diagram illustrating an example of a screen on which the call confirmation guidance DB42 is displayed on the accounting machine selection screen DB4.

In the call confirmation guidance DB42 illustrated in FIG. 22, the "accounting machine 10" is selected from the list display DB41 so that an "execution" key BD43 and a "cancel" key DB44 are displayed together with a message of "Retrieval transaction of accounting machine 10". Here, in a case where the operation to select the "cancel" key DB44 is performed (ACT85, NO), the processor 31 cancels the data retrieval and returns to the display state of the transmission completion screen DB3 illustrated in FIG. 20 (ACT81).

On the other hand, in a case where the operation of selecting the "execution" key BD43 is performed (ACT85, YES), the processor 31 determines that the accounting processing apparatus 12 (accounting machine) to be subjected to the data retrieval is confirmed, and starts the transaction retrieval processing (ACT86). In the transaction retrieval processing, for example, the transaction retrieval is notified the accounting processing apparatus 12 (here, the "accounting machine 10") selected as the retrieval target of, the accounting processing for the previously transmitted transaction information file is canceled, and the transaction information file is invalidated.

Upon receiving a notification of transaction calling from the registration machine 11 before the operation on the payment selection screen DA10 (ACT44, YES), the accounting processing apparatus 12 in the operation waiting state on the payment selection screen DA10 causes the data calling screen DA10 to be displayed so that the customer 22 cannot operate the payment selection screen DA10. FIG. 26 is a diagram illustrating an example of the data calling screen DA10. On the data retrieval screen DA10, for example, a message DA103 of "Data is being retrieved. Please wait." is displayed.

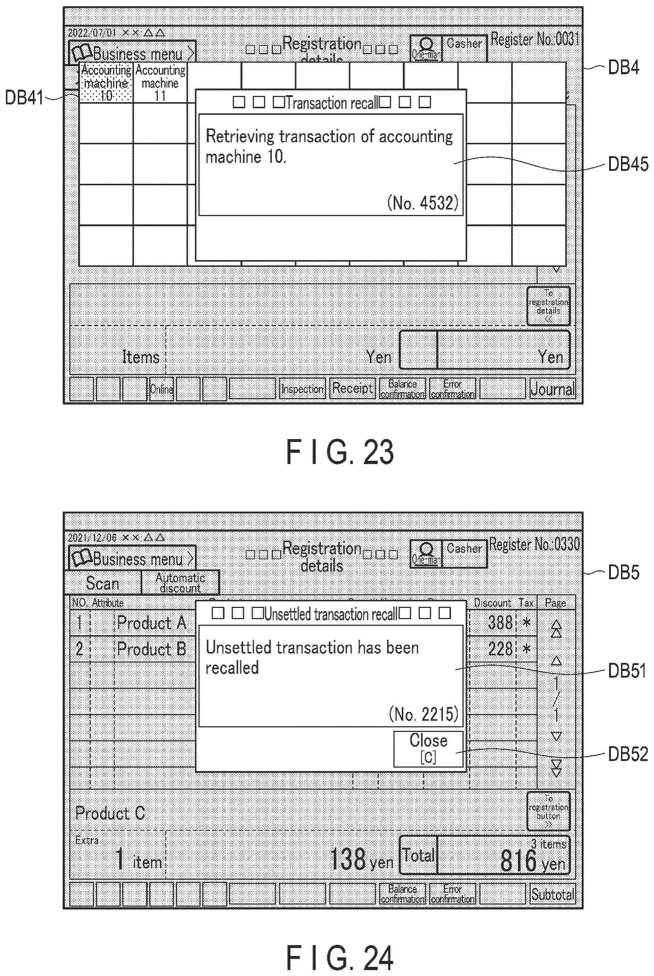

On the other hand, the processor 31 of the registration machine 11 causes a processing screen DB45 of the transaction retrieval processing to be displayed on the touch panel 38 (ACT87). Upon returning to the registration screen DB5 before transmission of the transaction information file and ending the transaction retrieval processing (ACT88, YES), the processor 31 causes a processing completion screen DB51 to be displayed (ACT89). FIG. 24 is a diagram illustrating an example of the processing completion screen DB51. In the processing completion screen DB51, for example, a message "Unsettled transaction has been retrieved" is displayed.

On the other hand, in a case where the transaction retrieval processing of the registration machine 11 is ended (ACT63, YES) and the processing termination is notified of from the registration machine 11, the accounting processing apparatus 12 returns to the state of displaying the standby screen DA0 from the data retrieval screen DA10 (ACT11).

In a case where a "close" key DB52 of the processing completion screen DB51 is operated, the processor 31 ends the display of the processing completion screen DB51, returns to the registration screen DB5, and enters the product registration waiting state in the similar manner as described above (FIG. 7, ACT72). In this way, the data retrieval is performed so that the registration machine 11 can resume the product registration and additionally register the product.

In a case where there is no notification of transaction retrieval from the registration machine 11 (ACT44, NO) and the processor 61 of the accounting processing apparatus 12 detects the operation for designating the payment method ("cash", "credit", and "electronic money") on the payment selection screen DA10 illustrated in FIG. 25 (ACT46, YES), the processor 61 executes the accounting processing for the product indicated by the transaction information file by the designated payment method (ACT47). Upon completion of the accounting processing (ACT48, YES), the processor 61 returns to the state of displaying the standby screen DA0 (ACT11).

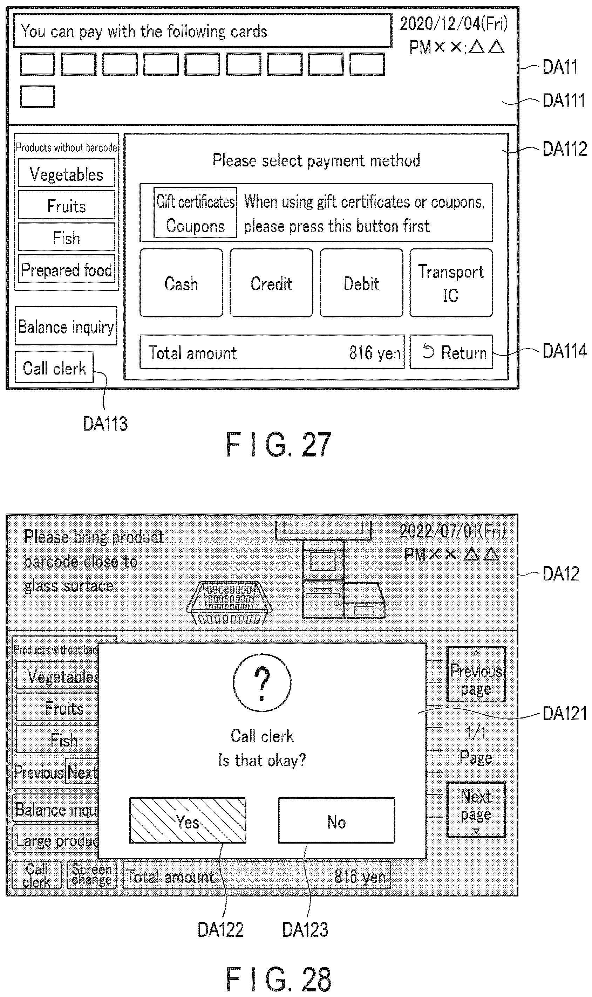

Furthermore, in the above description, the case where "no display" of the "return" button is discriminated based on the screen setting data in ACT41 has been described as an example. However, in a case where the processor 61 discriminates "display" of the "return" button based on the screen setting data (ACT42, NO), the processor 61 causes a payment selection screen (first accounting screen) including the "return" button to be displayed on the touch panel 67. FIG. 27 is a diagram illustrating an example of a payment selection screen DA11 including a "return" button. The payment selection screen DA11 is provided with a card list DA111 for displaying a list of card types usable for the accounting processing by, for example, a logo of a card company, a payment method selection key DA112, a "call clerk" button DA113, and a "return" button DA114.

Note that, even in a case where the payment selection screen DA11 (first accounting screen) including the "return" button DA114 is displayed, in a case where a notification of transaction retrieval is received from the registration machine 11, it is assumed that the transaction retrieval processing is executed in the same manner as described above (ACT44 to ACT46), and a detailed description thereof will be omitted.

Upon detection of the touch operation on the "call clerk" button DA113 of the payment selection screen DA11 (ACT50, NO → ACT51, YES), the processor 61 of the accounting processing apparatus 12 causes the touch panel 67 to display a clerk call confirmation screen (ACT52). FIG. 28 is a diagram illustrating an example of the clerk call confirmation screen DA12.

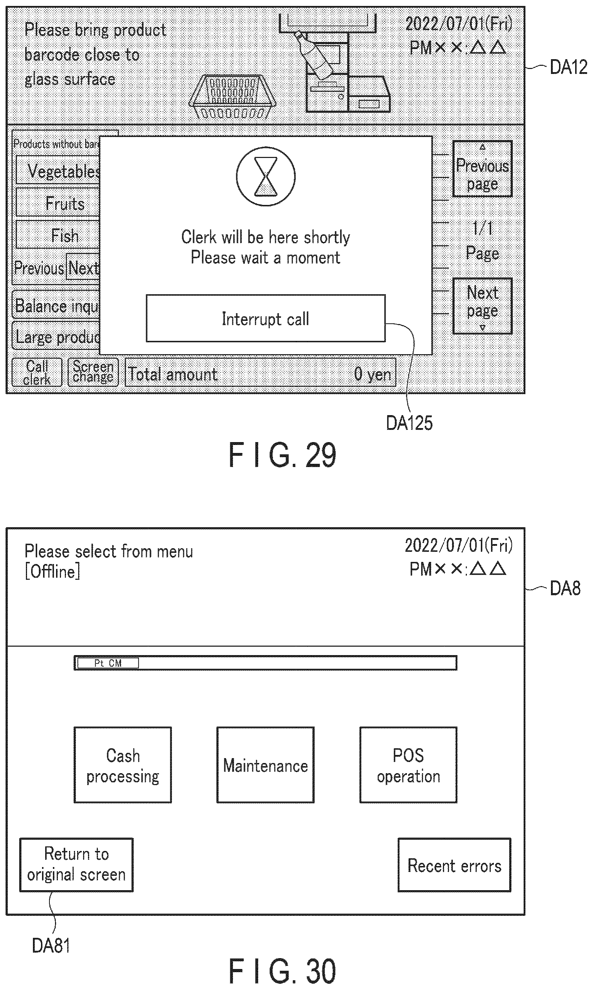

Upon detection of a touch operation on the "NO" button DA123 of the clerk call confirmation screen DA12 (ACT53, NO), the processor 61 returns to the display state of the product registration screen DA11 illustrated in FIG. 27 (ACT49). On the other hand, upon detecting a touch operation on the "YES" button D122 on the clerk call confirmation screen (ACT24, YES), the processor 61 causes the touch panel 67 to display a clerk calling screen DA12 (ACT54). FIG. 29 is a diagram illustrating an example of the clerk calling screen DA12.

Upon detection of a touch operation on an "interrupt a call" button DA125 of the clerk calling screen DA12 (ACT55, YES), the processor 61 enters a wait state for inputting the clerk code. For example, the clerk code is input by causing the scanner 69 to read the clerk barcode assigned to each clerk (ACT56). In a case where the clerk code read by the scanner 69 is confirmed to be a valid code, the processor 61 causes the touch panel 67 to display a management menu screen DA8 (ACT57). FIG. 30 is a diagram illustrating an example of the management menu screen DA8.

For example, buttons of "cash processing", "maintenance", and "POS operation" are provided on the management menu screen DA8, and in a case where the buttons are operated (ACT58, NO), the processor 61 executes various types of management processing (other processing) corresponding to the buttons (ACT59).

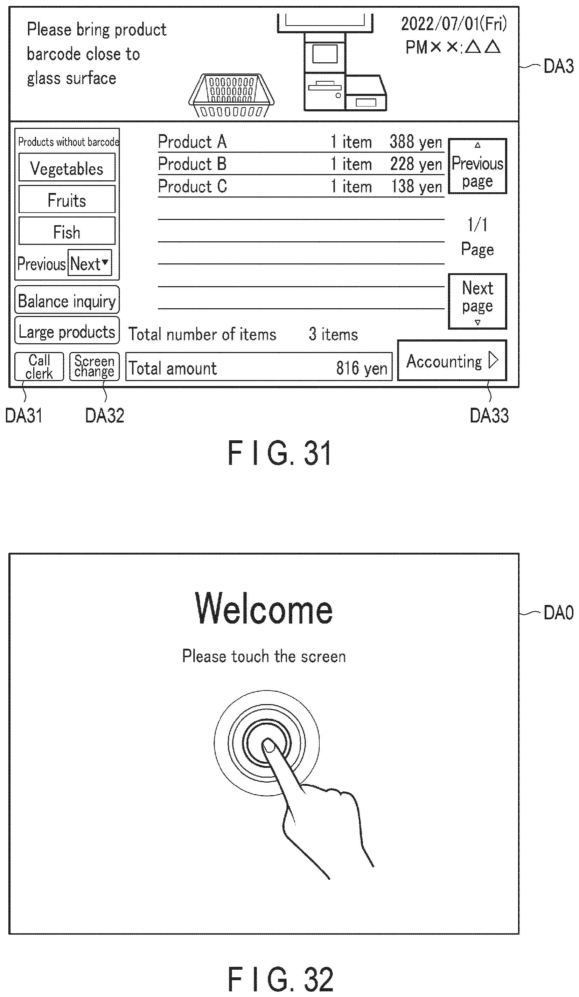

Here, since a "call clerk" button DA113 is operated to return to the product registration screen as the original screen, the touch operation is performed on a "return to original screen" button DA81 of the management menu screen DA8. Upon operating the "return to original screen" button DA81 (ACT29, YES), the processor 61 returns to the state of displaying the product registration screen DA3 illustrated in FIG. 31 (ACT15). Here, since the transaction information file has been received from the registration machine 11, the processor 61 causes the information of the product indicated by the transaction information file to be displayed on the product registration screen DA3. The product registration screen DA3 is provided with a "call clerk" button DA31, a "screen change" button 32, and an "accounting" button D33 since there is information of the product.

Upon detecting the operation of selecting the "accounting" button D33 (ACT16, NO → ACT17, NO → ACT32, YES), the processor 61 discriminates the screen setting of "display/no display" of the "return" button on the accounting screen (payment method selection screen) based on the screen setting data in the same manner as described above (FIG. 6, ACT41), and causes a payment selection screen DA11 (first accounting screen) including the" return" button illustrated in FIG. 27 or a payment selection screen DA10 (second accounting screen) not including the "return" button illustrated in FIG. 25 to be displayed on the touch panel 67 (ACT43, ACT49).

Upon detecting the operation for designating the payment method on the payment selection screen DA10 illustrated in FIG. 25 (ACT46, YES), the processor 61 of the accounting processing apparatus 12 executes the accounting processing for the product indicated by the transaction information file by the designated payment method (ACT47). Upon completion of the accounting processing (ACT48, YES), the processor 61 returns to the state of displaying the standby screen DA0 (ACT11).

Similarly, upon detecting the operation for designating the payment method on the payment selection screen DA11 illustrated in FIG. 27 (ACT60, YES), the processor 61 of the accounting processing apparatus 12 executes the accounting processing for the product indicated by the transaction information file by the designated payment method (ACT61). Upon completion of the accounting processing (ACT62, YES), the processor 61 returns to the state of displaying the standby screen DA0 (ACT11).

In a case where the operation of the "screen change" button 32 is detected on the product registration screen DA3 (ACT16, NO → ACT17, YES), the processor 61 executes processing of changing the screen setting data set in the setting file 631 in the same manner as described above (ACT18 to ACT21).

In this way, in a case where the accounting processing apparatus 12 according to the present embodiment receives the transaction information file (information related to the transaction of the product) from the registration machine 11 in a state where the standby screen is displayed, the accounting processing apparatus 12 can start an operation as an accounting machine of the semi-self-method. That is, it is possible to easily switch the operation without switching the operation according to the semi-self-method or the full-self-method with respect to the accounting processing apparatus 12.

Next, an operation of the accounting processing apparatus 12 in a case where the accounting system 10 is operated by the full-self-method will be described.

For example, in a case where the store is not congested (in a case where there are few customers 22 waiting for payment by the accounting processing apparatus 12), the accounting system 10 is operated by the full-self-method, and registration of the product and payment for the product (accounting processing) are executed in the accounting processing apparatus 12 by the operation of the customer 22. FIGS. 32 to 34 are diagrams illustrating examples of display screens on the touch panel 67 of the accounting processing apparatus 12.

The processor 61 of the accounting processing apparatus 12 in a standby state causes the touch panel 67 to display a standby screen DA0 (FIG. 5, ACT11). FIG. 32 is a diagram illustrating an example of the standby screen DA0 in the accounting processing apparatus 12. On the standby screen DA0, for example, a message "Welcome/Please touch screen" for prompting the customer 22 to operate the touch panel 67 is displayed.

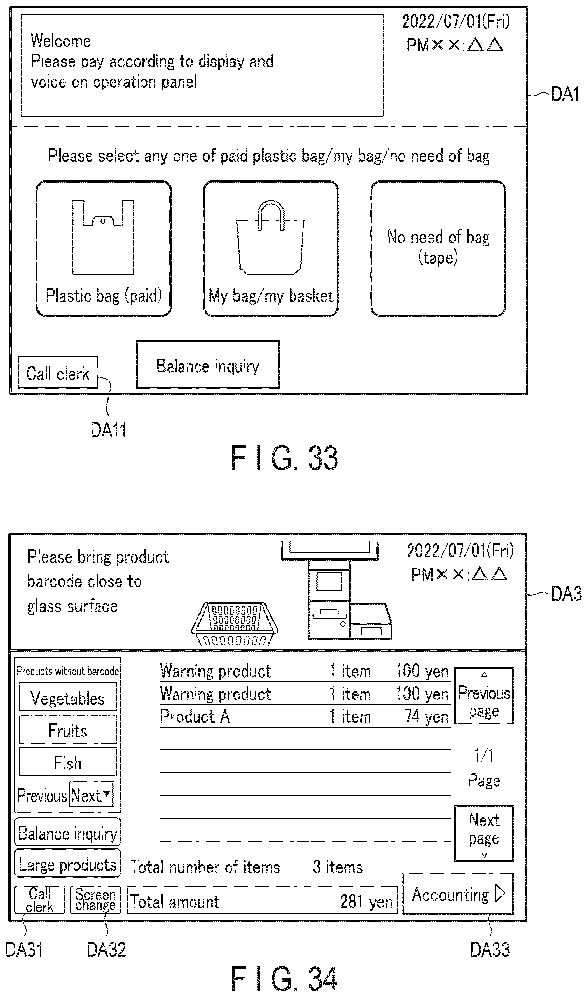

Upon detection of a touch operation on the touch panel 67 (ACT12, YES), the processor 61 displays a product registration start screen DA1 on the touch panel 67 (ACT13). FIG. 33 is a diagram illustrating an example of a product registration start screen in the accounting processing apparatus 12. The product registration start screen DA1 is provided with, for example, a button for causing the customer 22 to select paid plastic bag/my bag/no need of bag before registering the product, and a "call clerk" button DA11.

Upon detection of the touch operation on the button for selecting paid plastic bag/my bag/no need of bag (ACT14, YES), the processor 61 causes a product registration screen DA3 to be displayed on the touch panel 67 (ACT15). FIG. 34 is a diagram illustrating an example of the product registration screen DA3 in the accounting processing apparatus 12. The product registration screen DA3 is provided with a "call clerk" button DA31, a screen change button DA32, and an "accounting" button DA33. Details of the product registration screen DA3 are the same as those described above, and thus are omitted.

The processor 61 displaying the product registration screen DA3 waits for product registration. The customer 22 operates the scanner 69 to read the barcode attached to the product. The barcode is read by the scanner 69 so that the product code of the product is input to the accounting processing apparatus 12 (product registration). On the other hand, barcodes may not be attached to some products such as fresh food. In a case where the barcode is not attached to the product, the customer 22 operates a softkey corresponding to the product, a so-called product key, from a softkey group of products without a barcode displayed on a part of the registration screen. Upon operating the product key, the product code of the product corresponding to the product key is input to the accounting processing apparatus 12. As described above, upon inputting the product code of the product to the accounting processing apparatus 12, the processor 61 determines that the product has been registered.

In a case where it is determined that there is product registration (ACT16, YES), the processor 61 executes product sales data processing (ACT31). Specifically, the processor 61 searches a product file, and acquires product data such as the product name and the unit price of the product identified by the product code input through the scanner 69 or the touch panel 67. Then, the processor 61 stores product sales data including items such as a product code, a product name, a unit price, a sales volume, and a sales amount in the transaction memory. The transaction memory is a part of a volatile memory region in the main memory 62.

The processor 61 that has completed the product sales data processing waits whether there is product registration for the next product or whether the "accounting" button D33 is operated.

In a case where there is another product registration, the customer 22 performs the registration operation as described above also for the product (ACT16, YES). The processor 61 executes product sales data processing (ACT31). Then, upon completion of the registration operation for all the products, the customer 22 operates the "accounting" button D33.

Note that, on the product registration screen DA3, the screen setting indicated by the screen setting data set in the setting file 631 can be changed (switched) by operating the screen change button DA32. In a case where the touch operation on the screen change button DA32 is detected on the product registration screen DA3 (ACT16, NO → ACT17, YES), the processor 61 refers to the screen setting data set in the setting file 631, and discriminates which one of "display/no display" (first accounting screen/second accounting screen) of the "return" button is set (ACT18).

For example, in a case where it is discriminated that the screen setting data indicates the screen setting of "display" (first accounting screen) of the "return" button, the processor 61 causes the screen change confirmation screen to be displayed as illustrated in FIG. 12. On a screen change confirmation screen DA4 illustrated in FIG. 12, a message "There is [return] display" indicating the current state is displayed. Here, upon detecting a touch operation on the "Yes" button DA42 on the screen change confirmation screen, the processor 61 changes the setting contents indicated by the screen setting data to "no display" (second accounting screen) of the "return" button (ACT21). Upon detecting the touch operation on the "NO" button DA43 on the screen change confirmation screen, the processor 61 returns to the display state of the product registration screen DA3 without changing the screen setting data (ACT15).

On the other hand, in ACT18, in a case where it is discriminated that the screen setting data indicates the screen setting of "no display" (second accounting screen) of the "return" button, the processor 61 causes the screen change confirmation screen to be displayed as illustrated in FIG. 13. On the screen change confirmation screen DA5 illustrated in FIG. 13, a message "No [return] display" indicating the current state is displayed. Here, upon detecting a touch operation on the "Yes" button DA52 on the screen change confirmation screen, the processor 61 changes the setting contents indicated by the screen setting data to "display" (first accounting screen) of the "return" button (ACT21). Upon detecting the touch operation on the "NO" button DA53 on the screen change confirmation screen, the processor 61 returns to the display state of the product registration screen DA3 without changing the screen setting data (ACT15).

At the time of returning to the display state of the product registration screen DA3 after the screen setting is changed in accordance with the touch operation on the screen change button DA32, the same product as that in a case where the screen change button DA32 is operated is displayed in the registered state (the product registration screen does not change even if the screen change button is switched).

In addition, in a case where the accounting processing is instructed by the operation of the "accounting" button D33 of the product registration screen DA3 illustrated in FIG. 34 (ACT32, YES), the processor 61 causes a payment selection screen DA11 (first accounting screen) including the "return" button illustrated in FIG. 27 or a payment selection screen DA10 (second accounting screen) not including the "return" button illustrated in FIG. 25 to be displayed on the touch panel 67 based on the screen setting data of the setting file 631 (FIG. 6, ACT41) in the same manner as described above (ACT43, ACT49).

In a state where the payment selection screen DA10 (second accounting screen) not including the "return" button illustrated in FIG. 25 is displayed on the touch panel 67 (ACT43), in a case where the customer 22 wants to return to the product registration screen DA3 in order to add the product, the customer 22 operates the "call clerk" button DA103 of the payment selection screen DA10. Upon detection of the touch operation on the "call clerk" button DA103 on the payment selection screen DA10 (ACT44, NO → ACT46, NO), the processor 61 causes the touch panel 67 to display a clerk call confirmation screen DA12 as shown in FIG. 28 (ACT52). Hereinafter, the processing of (ACT52 to ACT59) is executed as described above.

Upon performing a touch operation on a "Return to original screen" button DA81 of the management menu screen DA8 displayed in ACT57 (ACT58, YES), the processor 61 returns to a state of displaying the product registration screen DA3 before the operation of the "accounting" button D33 illustrated in FIG. 34 is performed (ACT15). As a result, the customer 22 can add the product on the product registration screen DA3.

Similarly, in a state where the payment selection screen DA11 (first accounting screen) including the "return" button illustrated in FIG. 27 is displayed on the touch panel 67 (ACT49), the customer 22 operates a "call clerk" button DA113 or a "return" button DA114 of the payment selection screen DA10 in a case where the customer 22 wants to return to the product registration screen DA3 to add the product. The case where the "call clerk" button DA113 is operated is assumed to be executed in the same manner as described above, and a description thereof will be omitted (ACT51 to ACT59).

In a case where the operation of the "return" button DA114 of the payment selection screen DA11 is detected (ACT50, YES), the processor 61 returns to a state of displaying the product registration screen DA3 before the operation of the "accounting" button D33 illustrated in FIG. 34 is performed (ACT15). As a result, the customer 22 can add the product on the product registration screen DA3.

In this way, in the accounting processing apparatus 12, by operating the screen change button DA32 provided on the product registration screen DA3, it is possible to easily execute setting (change of screen setting) of "display/no display" (first accounting screen/second accounting screen) of the "return" button on the accounting screen (payment method selection screen) with respect to the screen setting data of the setting file 631. Therefore, the accounting screen (payment method selection screen) can be easily changed to a state corresponding to the semi-self-method or the full-self-method.

The information processing apparatus according to the above-described embodiment can be configured as follows.
(1) An accounting processing apparatus including:
   a registration screen display unit configured to display a product registration screen for receiving registration of first information on a product to be purchased in a case where an input operation is received while a standby screen is being displayed;
   a receiving unit configured to receive second information related to a transaction of a product from a registration machine;
   an accounting screen display unit configured to display an accounting screen for accounting processing for a product based on the second information in a case where the second information is received; and
   an accounting processing unit configured to perform accounting processing on the product based on the first information received through the product registration screen or the second information received by the receiving unit.
(2) The accounting processing apparatus according to (1), in which the accounting screen display unit is configured to switch a first accounting screen including a button for receiving a switching instruction of display on the product registration screen on the accounting screen and a second accounting screen not including the button according to a predetermined screen setting.
(3) The accounting processing apparatus according to (2), in which
   the registration screen display unit is configured to cause a screen change button for receiving an instruction to switch an accounting screen to be displayed on the product registration screen, and
   the accounting screen display unit is configured to switch the first accounting screen and the second accounting screen according to the screen setting set according to an operation on the screen change button.
(4) The accounting processing apparatus according to (3), in which the registration screen display unit is configured to cause the first information received on the product registration screen to be displayed, and display a display state of the first information according to an operation on the screen change button.
(5) A program for causing a computer to function as:
   a registration screen display unit configured to display a product registration screen for receiving registration of first information on a product to be purchased in a case where an input operation is received while a standby screen is being displayed;
   a receiving unit configured to receive second information related to a transaction of a product from a registration machine;
   an accounting screen display unit configured to display an accounting screen for accounting processing for a product based on the second information in a case where the second information is received; and
   an accounting processing unit configured to perform accounting processing on the product based on the first information received through the product registration screen or the second information received by the receiving unit.

Although some embodiments of the present invention have been described, these embodiments have been presented as examples, and are not intended to limit the scope of the invention. These novel embodiments can be implemented in various other forms, and various omissions, substitutions, and changes can be made without departing from the spirit of the invention. These embodiments and modifications thereof are included in the scope and spirit of the invention, and are included in the invention described in the claims and the equivalent scope thereof.

Furthermore, the processing described in the above-described embodiment can be provided to various devices by being written in a recording medium such as a magnetic disk (flexible disk, hard disk, etc.), an optical disk (CD-ROM, DVD, etc.), or a semiconductor memory as a program that can be executed by a computer. Furthermore, it is also possible to transmit the information through a communication medium and provide the information to various devices. The computer reads the program recorded in the recording medium or receives the program through the communication medium, and the operation is controlled by the program to execute the above-described processing.

## Claims

1. An accounting processing apparatus comprising:
a registration screen display unit configured to display a product registration screen for receiving registration of first information on a product to be purchased in a case where an input operation is received while a standby screen is being displayed;
a receiving unit configured to receive second information related to a transaction of a product from a registration machine;
an accounting screen display unit configured to display an accounting screen for accounting processing for a product based on the second information in a case where the second information is received; and
an accounting processing unit configured to perform accounting processing on the product based on the first information received through the product registration screen or the second information received by the receiving unit.

2. The accounting processing apparatus according to claim 1, wherein the accounting screen display unit is configured to switch a first accounting screen including a button for receiving a switching instruction of display on the product registration screen on the accounting screen and a second accounting screen not including the button according to a predetermined screen setting.

3. The accounting processing apparatus according to claim 2, wherein
the registration screen display unit is configured to cause a screen change button for receiving an instruction to switch an accounting screen to be displayed on the product registration screen, and
the accounting screen display unit is configured to switch the first accounting screen and the second accounting screen according to the screen setting set according to an operation on the screen change button.

4. The accounting processing apparatus according to claim 3, wherein the registration screen display unit is configured to display the first information received on the product registration screen, and display a display state of the first information according to an operation on the screen change button.

5. A program recording medium recording a program for causing a computer to realize:
a registration screen display function of displaying a product registration screen for receiving registration of first information on a product to be purchased in a case where an input operation is received while a standby screen is being displayed;
a receiving function of receiving second information related to a transaction of a product from a registration machine;
an accounting screen display function of displaying an accounting screen for accounting processing for a product based on the second information in a case where the second information is received; and
an accounting processing function of performing accounting processing on the product based on the first information received through the product registration screen or the second information received by the receiving function.
